# EUROPEAN PATENT APPLICATION

(11) **EP 4 651 215 A1**
(43) Date of publication of application: **19.11.2025**
(21) Application number: 24907880.9
(22) Date of filing: 29.11.2024
(51) Int. Cl.: H01M 4/04, B05C 5/02, B05C 9/04, B05C 9/14, B05C 11/10

(54) **ELECTRODE SHEET MANUFACTURING DEVICE AND ELECTRODE SHEET MANUFACTURING METHOD USING SAME**

(30) Priority: 20.12.2023 KR 20230187010
(71) Applicant: LG Energy Solution, Ltd., Seoul 07335 (KR)
(72) Inventor: CHOI, Min Jun, Daejeon 34122 (KR)
(74) Representative: Plasseraud IP
(86) International application number: PCT/KR2024/019397
(87) International publication number: WO 2025/135595

(57) **Abstract**

Disclosed are an electrode sheet manufacturing apparatus including a rewinder configured to wind a metal foil, a first coating member located at the rear of the rewinder, the first coating member being configured to apply a first coating material to a predetermined area of the metal foil, and a second coating member located between the rewinder and the first coating member, the second coating member being configured to apply a second coating material comprising an electrode active material, wherein the applied first coating material and the applied second coating material do not overlap each other, and an electrode sheet manufacturing method using the same, whereby it is possible to prevent a sliding portion from being formed at an outer periphery of an electrode.

## Description

### [Technical Field]

This application claims the benefit of priority to Korean Patent Application No. 2023-0187010 filed on December 20, 2023, the disclosure of which is incorporated herein by reference in its entirety.

The present invention relates to an electrode sheet manufacturing apparatus and an electrode sheet manufacturing method using the same. More particularly, the present invention relates to an electrode sheet manufacturing apparatus capable of preventing the occurrence of a sliding portion at a coated portion, which is an electrode mixture layer, coated on metal foil, and an electrode sheet manufacturing method using the same.

### [Background Art]

A lithium secondary battery, which is capable of being charged and discharged, has been widely used as an energy source for wireless mobile devices or wearable devices, which are worn on bodies, and has also been used as an energy source for electric vehicles and hybrid electric vehicles presented as alternatives to existing gasoline and diesel vehicles, which cause air pollution.

In order to mass-produce the lithium secondary battery, an electrode sheet is manufactured, and the electrode sheet is divided to form electrodes.

A general electrode sheet manufacturing process includes a step of coating the remaining part of the surface of an electrode sheet except for the part where an electrode tab is to be formed with an electrode active material and a step of drying and rolling the electrode active material. In order to manufacture electrodes using the electrode sheet thus manufactured, a process of slitting the electrode sheet and a process of notching the slit electrode sheets may be performed.

An electrode of the lithium secondary battery includes a coated portion having an electrode active material coated on one surface or both surfaces of an electrode plate and an uncoated portion having no coated electrode active material, wherein an electrode tab may be formed at the uncoated portion.

During the process of manufacturing the electrode sheet, there may occur a phenomenon in which an outer periphery of the coated portion, which is coated with an electrode mixture, flows down before the coated portion is dried, and such an area of the coated portion is called a sliding portion. If an electrode is manufactured using the electrode sheet including the sliding portion, which is an area where the thickness of the electrode mixture is reduced, and the electrode and a separator are stacked and laminated, there may occur a phenomenon in which the electrode and the separator are separated from each other instead of being bonded to each other.

This phenomenon may reduce the speed at which lithium ions pass through the separator, which may lead to the formation of negative electrode overpotential, serious imbalance in the concentration of lithium salts in an electrolyte, and accelerated electrolyte degradation, which may quickly deplete the electrolyte. This results in the precipitation of lithium.

In order to solve these problems, a method of compensating for the thickness reduction by attaching a CPP film to the sliding portion of the electrode was attempted, but the above problems could not be completely solved.

Alternatively, an etching process is being developed in which the sliding portion is removed using a laser during a process of coating the electrode active material, but process difficulties may increase as the thickness of the electrode active material is reduced, and fine pinholes may occur, which may affect the quality of the electrode.

Patent Document 1 discloses a method of forming a dam line coating layer in a shape that surrounds the area to be coated with an electrode slurry and coating the area surrounded by the dam line coating layer with the electrode slurry to form an electrode mixture layer.

In Patent Document 1, it is possible to prevent the formation of a sliding portion by forming the dam line coating layer at the edge of the electrode slurry in order to prevent the electrode slurry from flowing down, but a process of forming the dam line coating layer and an electrode slurry coating process must be performed separately, which may increase the process time, and a process of filling the area inside the dam line coating layer with the electrode slurry must be performed precisely.

Patent Document 2 relates to an electrode having a binder layer and a method of manufacturing the same, wherein an electrode active material layer is formed on a current collector having an electrode tab formed at one end thereof, a binder layer is formed between the current collector and the electrode active material layer, and the binder layer is formed at each of both ends of the electrode active material layer.

In Patent Document 2, it is possible to prevent an electrode slurry from being detached from the current collector during a current collector notching process by applying a binder composition to both ends of the part where the electrode slurry is to be applied before applying the electrode slurry.

That is, Patent Document 2 does not suggest technology capable of preventing the formation of a sliding portion at the electrode active material layer.

Therefore, there is a need for technology capable of preventing the formation of a sliding portion at an outer periphery of a coated portion having an electrode active material coated thereon such that an electrode and a separator are bonded to each other over the entirety of the interface therebetween, thereby preventing electrolyte depletion and lithium precipitation, and continuously performing an electrode manufacturing process without delay.

### (Prior Art Documents)

(Patent Document 1) Korean Patent Application Publication No. 2023-0006265 (2023.01.10)
(Patent Document 2) Korean Patent Application Publication No. 2023-0061044 (2023.05.08)

### [Disclosure]

### [Technical Problem]

The present invention has been made in view of the above problems, and it is an object of the present invention to provide an electrode sheet manufacturing apparatus capable of preventing the formation of a sliding portion at an outer periphery of a coated portion having an electrode mixture coated thereon and an electrode sheet manufacturing method using the same.

### [Technical Solution]

An electrode sheet manufacturing apparatus according to the present invention to accomplish the above object includes a rewinder (200) configured to wind a metal foil (110), a first coating member (300) located at the rear of the rewinder (200), the first coating member being configured to apply a first coating material (330) to a predetermined area of the metal foil (110), and a second coating member (400) located between the rewinder (200) and the first coating member (300), the second coating member being configured to apply a second coating material (430) including an electrode active material, wherein the applied first coating material (330) and the applied second coating material (430) do not overlap each other.

The first coating material (330) may include a hydrophobic material.

The first coating material (330) may include a volatile material.

The electrode sheet manufacturing apparatus may further include a drying member (500) located between the rewinder (200) and the second coating member (400), the drying member being configured to volatilize the first coating material (330).

Each of the first coating member (300) and the second coating member (400) may be a slot die.

The first coating member (300) may include at least one first nozzle (310) and a first coating material supply unit (320) configured to supply the first coating material

(330) to the first nozzle (310), and the second coating member (400) may include at least one second nozzle (410) and a second coating material supply unit (420) configured to supply the second coating material (430) to the second nozzle (410).

Each of the first nozzle (310) and the second nozzle (410) may be provided in one, and the first nozzle (310) and the second nozzle (410) may be located so as not to overlap each other in a longitudinal direction (X) of the metal foil

(110).

The first nozzle (310) may be provided in one while the second nozzle (410) may be provided in two, and the first nozzle (310) and the second nozzles (410) may be located so as not to overlap each other in the longitudinal direction (X) of the metal foil.

Each of the first nozzle (310) and the second nozzle (410) may be provided in plural so as to be spaced apart from each other by a predetermined distance in a width direction (Y) of the metal foil (110), and the first nozzles (310) and the second nozzles (410) may be located so as not to overlap each other in the longitudinal direction (X) of the metal foil (110).

The second coating material (430) may include a hydrophilic material.

The present invention provides an electrode sheet manufacturing method using the electrode sheet manufacturing apparatus. Specifically, the electrode sheet manufacturing method includes a first step of supplying a metal foil (110), a second step of coating the metal foil (110) with a first coating material (330) including a hydrophobic material, and a third step of coating the metal foil (110) with a second coating material (430) including an electrode active material, wherein the first coating material (330) and the second coating material (430) are continuously applied to the metal foil (110) in a longitudinal direction (X).

The first coating material (330) and the second coating material (430) may not overlap each other.

The electrode sheet manufacturing method may further include a fourth step of drying the metal foil (110) coated with the first coating material (330) and the second coating material (430) after the third step.

In the second step, the first coating material (330) may be provided in plural so as to be spaced apart from each other in a width direction (Y) of the metal foil (110).

The second coating material (430) may include a hydrophilic material.

In addition, the present invention may provide various combinations of the above solving means.

### [Advantageous Effects]

As is apparent from the above description, in an electrode sheet manufacturing apparatus according to the present invention and an electrode sheet manufacturing method using the same, when a first coating material including a hydrophobic material is applied to a predetermined area of metal foil and a second coating material including a hydrophilic material is applied to the remaining area to which the first coating material is not applied, the first coating material may serve as a bump that prevents the second coating material from flowing down, whereby it is possible to prevent the formation of a sliding portion at an outer periphery of the second coating material.

In addition, the electrode sheet manufacturing apparatus according to the present invention and the electrode sheet manufacturing method using the same have the advantage that the first coating material includes a volatile material, which may be volatilized and removed during a drying process of an electrode sheet, whereby a separate apparatus or process for removing the first coating material is not needed.

Furthermore, in an electrode manufactured by the electrode sheet manufacturing apparatus according to the present invention and the electrode sheet manufacturing method using the same, a coated portion has no sliding portion, whereby the entire area facing a separator may be bonded to the separator, and therefore it is possible to prevent depletion of an electrolyte or precipitation of lithium ions.

### [Description of Drawings]

FIG. 1 is a perspective view of an electrode sheet manufacturing apparatus according to a first embodiment of the present invention.
FIG. 2 is a perspective view of an electrode sheet manufacturing apparatus according to a second embodiment of the present invention.
FIG. 3 is a perspective view of an electrode sheet manufacturing apparatus according to a third embodiment of the present invention.
FIG. 4 is sectional views taken along lines A-A', B-B', C-C', and D-D' of FIG. 3.
FIG. 5 is a perspective view of an electrode sheet manufacturing apparatus according to a fourth embodiment of the present invention.
FIG. 6 is a perspective view of an electrode sheet manufacturing apparatus according to a fifth embodiment of the present invention.
FIG. 7 is a flowchart of an electrode sheet manufacturing method according to the present invention.
FIG. 8 is a plan view of an electrode sheet manufactured using the electrode sheet manufacturing apparatus according to the first embodiment, illustrating a process of forming an electrode.
FIG. 9 is a plan view of an electrode sheet manufactured using the electrode sheet manufacturing apparatus according to the second embodiment, illustrating a process of forming an electrode.
FIG. 10 is a plan view of an electrode sheet manufactured using the electrode sheet manufacturing apparatus according to the third embodiment, illustrating a process of forming an electrode.
FIG. 11 is a plan view of an electrode sheet manufactured using the electrode sheet manufacturing apparatus according to the third embodiment, illustrating a process of forming an electrode having a different shape.
FIG. 12 is a plan view of a modified electrode sheet, illustrating a process of forming an electrode.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Metal foil in this specification is a target which is configured in the form of a sheet and to which a first coating material and a second coating material are applied.

In addition, an electrode sheet is defined as metal coil coated with at least one of the first coating material and the second coating material before slitting.

In addition, the electrode mixture includes a positive electrode active material or a negative electrode active material, a conductive agent, a binder, a solvent, and an additive, and conceptually includes an electrode slurry, which is the electrode mixture before drying.

Embodiments of the present invention will be described in detail with reference to the drawings.

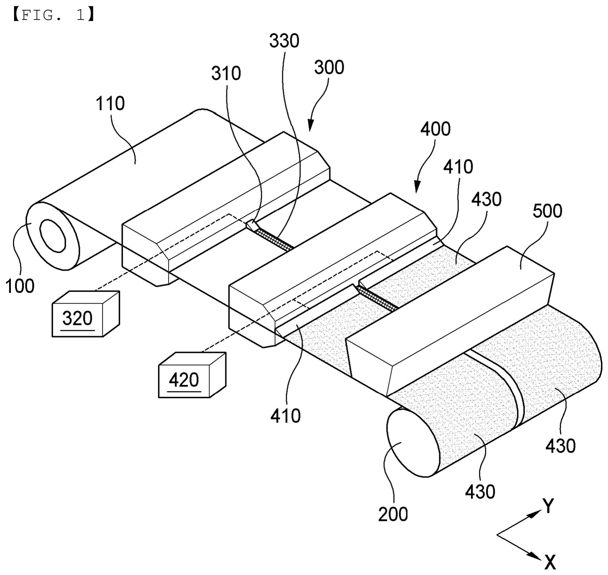

FIG. 1 is a perspective view of an electrode sheet manufacturing apparatus according to a first embodiment of the present invention.

As shown in FIG. 1, the electrode sheet manufacturing apparatus according to the first embodiment includes an unwinder 100 configured to unwind metal foil 110, a rewinder 200 configured to wind the metal foil 110, a first coating member 300 configured to apply a first coating material 330 to a predetermined area of the metal foil 110 unwound from unwinder 100, a second coating member 400 configured to apply a second coating material 430 including an electrode active material, and a drying member 500 configured to volatilize the first coating material 330.

Specifically, the unwinder 100 and the rewinder 200 are configured to continuously or intermittently transfer the wound metal foil 110 in one direction.

The first coating member 300 includes a first nozzle 310 located in the middle of the metal foil 110 in a width direction Y such that the first coating material 330 can be continuously coated on the metal foil 110 in a longitudinal direction X and a first coating material supply unit 320 configured to supply the first coating material 330 to the first nozzle 310.

Here, the first coating material 330 may include a hydrophobic polymer, a hydrophobic solvent, and a volatile material, and the hydrophobic polymer may be at least one selected from the group consisting of polybutadiene, polyurethane, polyimide, polyester, polycarbonate, polyphenylene sulfide (PPS), polyolefin, polydimethylsiloxane (PDMS), a styrene-butadiene copolymer, (meth)acrylate, polyacrylonitrile (PAN), polytetrafluoroethylene (PTFE), and a mixture thereof.

The hydrophobic solvent may be at least one selected from the group consisting of propanol, butanol, pentanol, hexanol, ethylene glycol, propylene glycol, diethylene glycol, glycerol, and a mixture thereof.

The second coating member 400, which is located between the rewinder 200 and the first coating member 300, includes two second nozzles 410 and a second coating material supply unit 420 configured to supply the second coating material 430 to the second nozzles 410.

Here, it is preferable for the second nozzle 410 to be located so as not to overlap the first nozzle 310 in the longitudinal direction X such that overlap between the first coating material 330 and the second coating material 430 is minimized and such that the second coating material 430 can be continuously coated on the metal foil 110 in the longitudinal direction X.

The second coating material 430 may be an electrode mixture including an electrode active material, a binder, a conductive agent, an additive, and a solvent, each of which may include a hydrophilic material.

For example, a polar solvent may be used as the hydrophilic solvent constituting the second coating material 430, and water may be a representative hydrophilic solvent. In addition, the hydrophilic binder may include at least one hydrophilic monomer selected from the group consisting of (meth)acrylic acid, itaconic acid, sodium p-styrene sulfonate, sodium vinyl sulfonate, sodium allylsulfonate, sodium 2-methyl allylsulfonate, sodium ethyl methacrylate sulfonate, (meth)acrylamide, N-methylolacrylamide, N,N-dimethylacrylamide, and 2-acrylamide-2-methylpropane sulfonic acid.

The electrode active material may include a conventional positive electrode active material and a conventional negative electrode active material for lithium secondary batteries, and the type of the electrode active material is not limited.

Meanwhile, the first nozzle 310 and the second nozzle 410 may be slot dies capable of extruding the first coating material 330 and the second coating material 430 supplied in the form of the electrode slurry to one surface of the metal foil 110 so as to be coated thereon.

As such, the first coating material 330 includes a hydrophobic material, whereas the second coating material 430 includes a hydrophilic material. Even if the second coating material 430 is added to a part of the area on which the first coating material 330 has been coated, therefore, it is possible to prevent the second coating material 430 from being coated on the area to which the first coating material 330 is applied, whereby the second coating material 430 is coated only on the remaining areas except the area to which the first coating material 330 has been applied.

The drying member 500, which is located between the second coating member 400 and the rewinder 200, is configured to volatilize the first coating material 330 while drying the second coating material 430.

Specifically, the metal foil 110 to which the first coating material 330 and the second coating material 430 have been added is dried while passing through the drying member 500. The drying member 500 may be configured in the form of a chamber through which the metal foil 110 can pass, or may be configured to heat an upper surface and a lower surface of the metal foil 110 in order to dry the same.

As such, in the present invention, the process of drying the first coating material 330 and the process of drying the second coating material 430 are carried out simultaneously, and therefore the manufacturing process is simpler and the manufacturing cost is lower than when the first coating material and the second coating material are separately dried.

As described above, an uncoated portion from which the first coating material 330 has been removed and a coated portion having the second coating material 430 coated thereon are formed on the metal foil 110 that has passed through the drying member 500, whereby an electrode sheet is manufactured.

Although not shown in FIG. 1, a support (not shown) configured to support the metal foil 110 may be further disposed under the metal foil 110, and a first nozzle and a second nozzle may be further disposed under the metal foil 110.

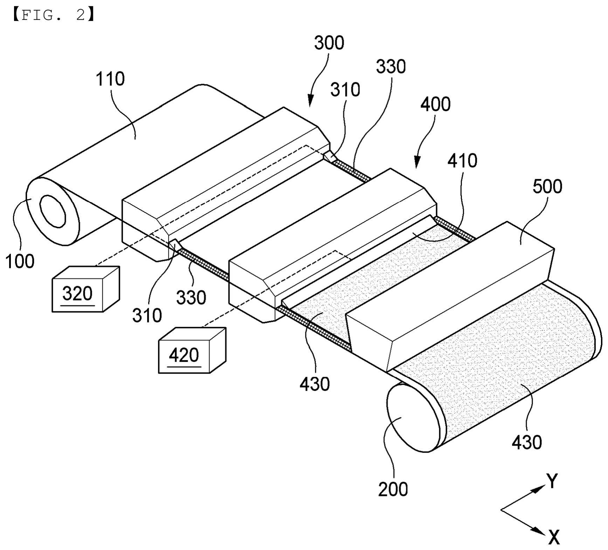

FIG. 2 is a perspective view of an electrode sheet manufacturing apparatus according to a second embodiment of the present invention. Referring to FIG. 2, the electrode sheet manufacturing apparatus according to the second embodiment is identical to the electrode sheet manufacturing apparatus according to the first embodiment, except for the positions and numbers of first nozzles 310 and second nozzles 410.

Specifically, two first nozzles 310 configured to discharge a first coating material 330 are located respectively at both ends of metal foil 110 in the width direction Y, whereas one second nozzle 410 is configured to discharge a second coating material 430.

Of course, the first nozzles 310 and the second nozzle 410 are located so as not to overlap each other in the longitudinal direction X to minimize overlap between the first coating material 330 and the second coating material 430.

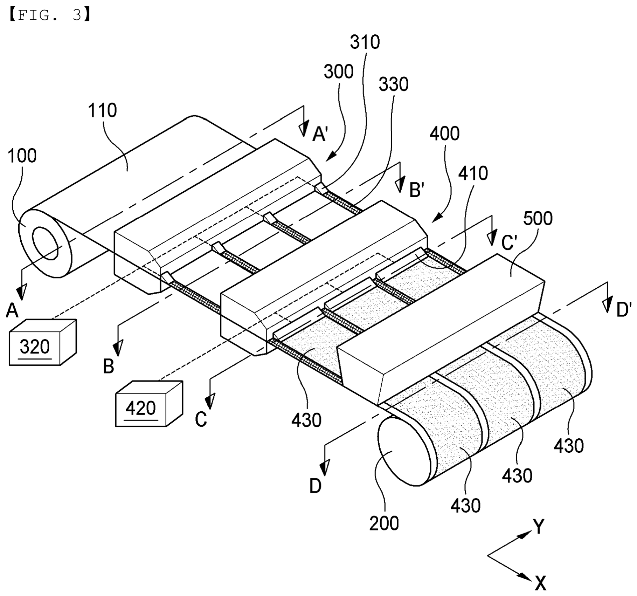

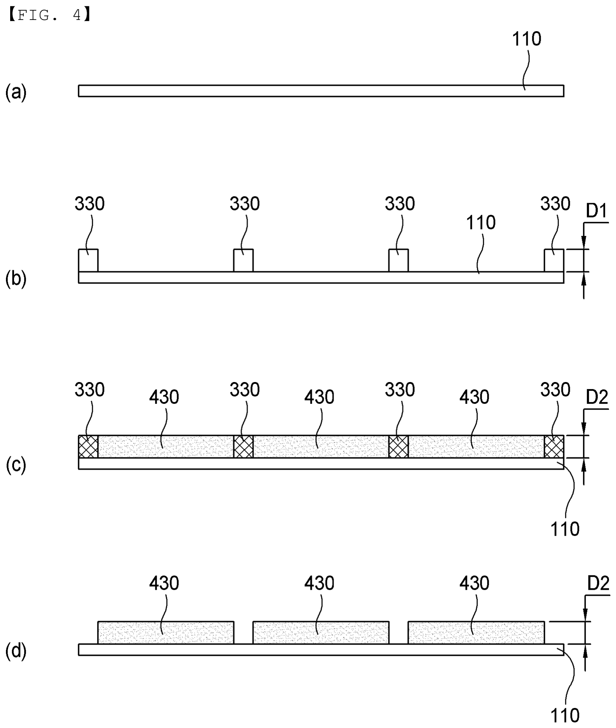

FIG. 3 is a perspective view of an electrode sheet manufacturing apparatus according to a third embodiment of the present invention, and FIG. 4 is sectional views taken along lines A-A', B-B', C-C', and D-D' of FIG. 3. Referring to FIG. 3, the electrode sheet manufacturing apparatus according to the third embodiment is identical to the electrode sheet manufacturing apparatus according to the first embodiment, except for the positions and numbers of first nozzles 310 and second nozzles 410.

Specifically, four first nozzles 310 configured to discharge a first coating material 330 are disposed at both ends of the metal foil 110 in the width direction Y and between both ends of the metal foil so as to be spaced apart from each other by a predetermined distance, whereas three second nozzles 410 configured to discharge a second coating material 430 are disposed in the width direction Y of the metal foil 110.

Of course, the first nozzles 310 and the second nozzles 410 are located so as not to overlap each other in the longitudinal direction X to minimize overlap between the first coating materials 330 and the second coating material 430.

Meanwhile, in FIG. 4, (a) is a vertical sectional view taken along line A-A' of FIG. 3 before the metal foil 110 passes through the first coating member 300, (b) is a vertical sectional view taken along line B-B' of FIG. 3 after the metal foil 110 has passed through the first coating member 300, whereby the first coating material 330 has been coated, (c) is a vertical sectional view taken along line C-C' of FIG. 3 after the metal foil has passed through the second coating member 400, whereby the second coating material 430 has been coated between the first coating material 330, and (d) is a sectional view taken along line D-D' of FIG. 3 after the metal foil has passed through the drying member 500, whereby the first coating material 330 has been removed.

Since the first coating material 330 is added to the metal foil 110 to prevent the second coating material 430 from flowing down, it is preferable for the discharge amount of the first coating material to be controlled such that the thickness D1 of the first coating material is equal to or less than the thickness D2 of the second coating material 430.

Of course, since the first coating material 330 includes a volatile material and may be volatilized and removed by the drying member 500, the thickness D1 of the first coating material 330 may be formed so as to be greater than the thickness D2 of the second coating material.

Since the second coating material 430 is applied between the first coating materials 330, the first coating material 330 may serve as a bump that prevents the second coating material 430 from flowing down, whereby an inclined sliding portion is not formed at an outer periphery of the second coating material 430 and the overall thickness of the second coating material 430 is uniform.

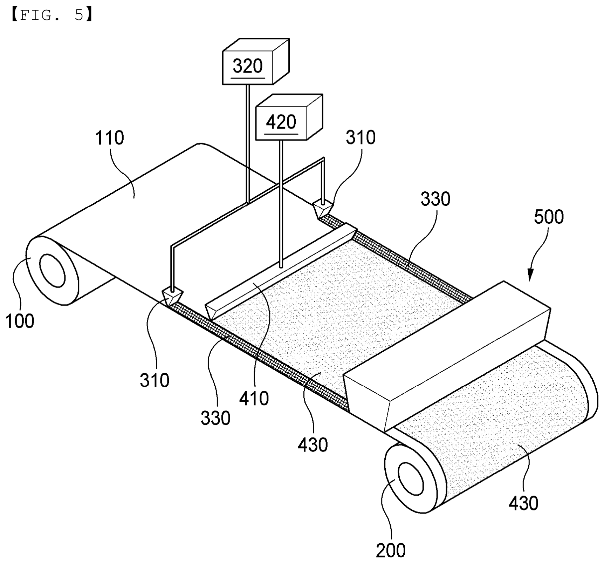

FIG. 5 is a perspective view of an electrode sheet manufacturing apparatus according to a fourth embodiment of the present invention.

Referring to FIG. 5, the electrode sheet manufacturing apparatus according to the fourth embodiment is substantially similar to the electrode sheet manufacturing apparatus according to the second embodiment, except for the appearance thereof.

Specifically, in the second embodiment, the first coating material 330 and the second coating material 430 are supplied from the side, whereas in the fourth embodiment, the first coating material 330 and the second coating material 430 are supplied from above.

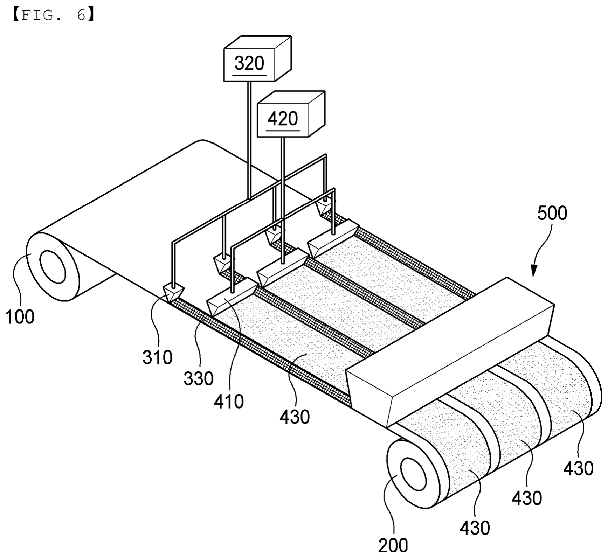

FIG. 6 is a perspective view of an electrode sheet manufacturing apparatus according to a fifth embodiment of the present invention. Referring to FIG. 6, the electrode sheet manufacturing apparatus according to the fifth embodiment is substantially similar to the electrode sheet manufacturing apparatus according to the third embodiment, except for the appearance thereof.

Specifically, in the third embodiment, the first coating material 330 and the second coating material 430 are supplied from the side, whereas in the fifth embodiment, the first coating material 330 and the second coating material 430 are supplied from above.

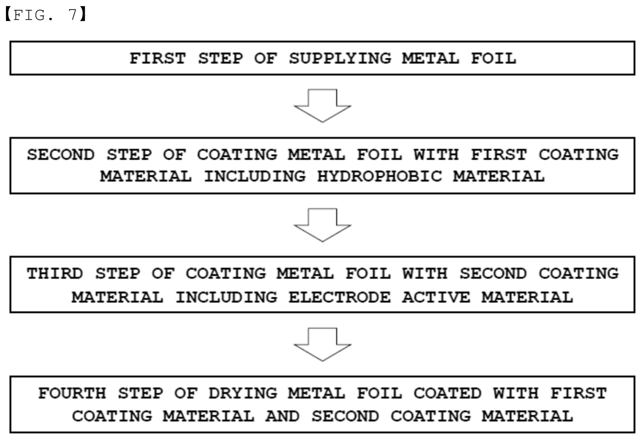

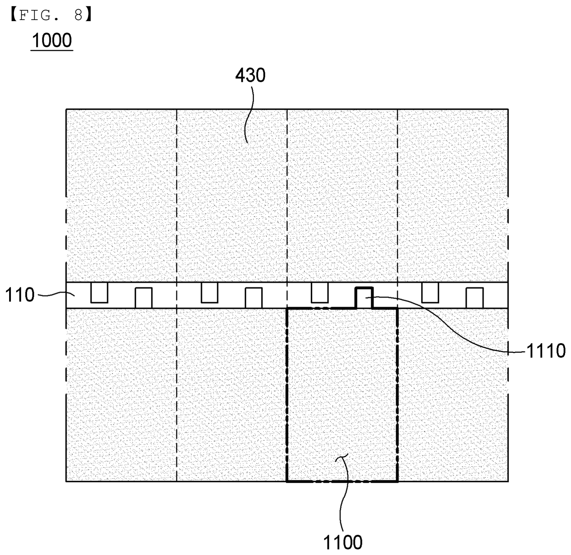

Hereinafter, an electrode sheet manufacturing method using the electrode sheet manufacturing apparatus will be described. FIG. 7 is a flowchart of an electrode sheet manufacturing method according to the present invention, and FIG. 8 is a plan view of an electrode sheet manufactured using the electrode sheet manufacturing apparatus according to the first embodiment, illustrating a process of forming an electrode.

Referring to FIG. 7, the electrode sheet manufacturing method according to the present invention includes a first step of supplying metal foil, a second step of coating the metal foil with a first coating material including a hydrophobic material, a third step of coating the metal foil with a second coating material including an electrode active material, and a fourth step of drying the metal foil coated with the first coating material and the second coating material.

As described above, the first coating material 330 and the second coating material 430 are continuously applied to the metal foil 110 in the length direction, but the first coating material 330 and the second coating material 430 do not overlap with each other, and the first coating material 330 is volatilized during a drying process.

Therefore, as shown in FIG. 8, an electrode sheet 1000 is formed such that the middle of the electrode sheet, to which the first coating material has been applied, in the width direction is an uncoated portion, from which metal foil 110 is exposed, and coated portions, to which the second coating material 430 has been applied, are provided on both sides of the uncoated portion.

Upon manufacturing an electrode using the electrode sheet 1000 having the above-described shape, the electrode sheet 1000 is notched along a notch line of the electrode sheet 1000 in the width direction.

That is, the electrode sheet 1000 is slit in the width direction, and the middle portion of the electrode sheet, from which the metal foil 110 is exposed, and the coated portions, to which the second coating material has been applied, are notched along a thick alternate long and two short dashes line, whereby a plurality of electrodes 1100 each having an electrode tab 1110 may be obtained.

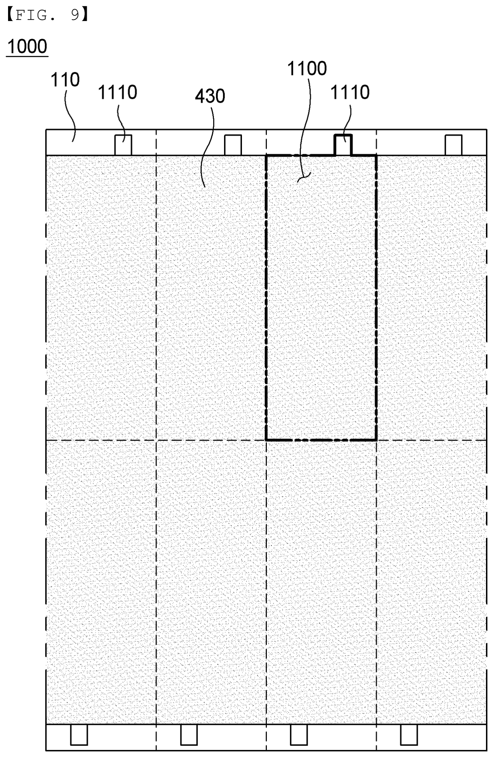

FIG. 9 is a plan view of an electrode sheet manufactured using the electrode sheet manufacturing apparatus according to the second embodiment, illustrating a process of forming an electrode. Referring to FIG. 9, when the electrode sheet manufacturing apparatus according to the second embodiment is used, the electrode sheet 1000 is formed such that edges of both sides of the electrode sheet, to which the first coating material has been applied, in the width direction are uncoated portions, from which metal foil 110 is exposed and a coated portion, to which the second coating material 430 has been applied, is provided between the uncoated portions, i.e., in the middle of the electrode sheet.

Upon manufacturing an electrode using the electrode sheet 1000 having the above-described shape, the electrode sheet 1000 is slit in the longitudinal direction, and the uncoated portions formed at the edges of both sides of the electrode sheet, from which the metal foil 110 is exposed, and the coated portion are notched along a thick alternate long and two short dashes line, whereby a plurality of electrodes 1100 each having an electrode tab 1110 may be obtained.

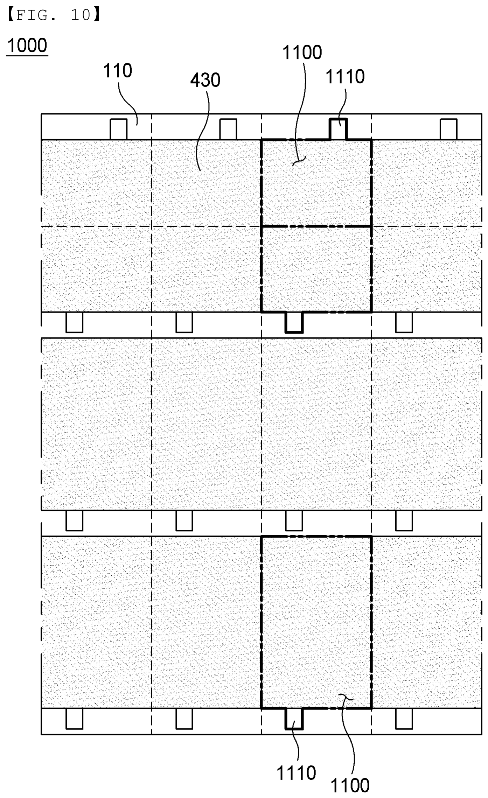

FIG. 10 is a plan view of an electrode sheet manufactured using the electrode sheet manufacturing apparatus according to the third embodiment, illustrating a process of forming an electrode. Referring to FIG. 10, when the electrode sheet manufacturing apparatus according to the third embodiment is used, the electrode sheet 1000 is formed such that four areas, including edges of both sides of the electrode sheet, to which the first coating material has been applied, in the width direction, are uncoated portions, from which metal foil 110 is exposed, and three coated portions, to which the second coating material 430 has been applied, are provided between the uncoated portions, i.e., in the middle of the electrode sheet.

Upon manufacturing an electrode using the electrode sheet 1000 having the above-described shape, the electrode sheet 1000 is slit in the longitudinal direction, and the uncoated portions, from which the metal foil 110 is exposed, and the coated portions are notched along a thick alternate long and two short dashes line, whereby a plurality of electrodes 1100 each having an electrode tab 1110 may be obtained.

In the electrode sheet 1000 of FIG. 10, the size of the notching line indicated by the thick alternate long and two short dashes line is different, whereby it is possible to manufacture two types of electrodes 1100 having different sizes.

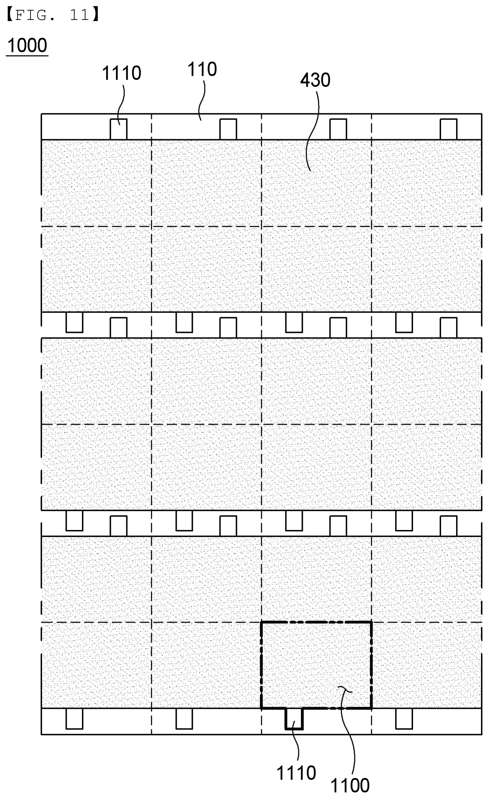

FIG. 11 is a plan view of an electrode sheet manufactured using the electrode sheet manufacturing apparatus according to the third embodiment, illustrating a process of forming an electrode having a different shape. Referring to FIG. 11, when the electrode sheet manufacturing apparatus according to the third embodiment is used, the electrode sheet 1000 is formed such that four areas, including edges of both sides of the electrode sheet, to which the first coating material has been applied, in the width direction, are uncoated portions, from which metal foil 110 is exposed, and three coated portions, to which the second coating material 430 has been applied, are provided between the uncoated portions, i.e., in the middle of the electrode sheet.

Upon manufacturing an electrode using the electrode sheet 1000 having the above-described shape, the electrode sheet 1000 is slit in the longitudinal direction, and the uncoated portions, from which the metal foil 110 is exposed, and the coated portions are notched along a thick alternate long and two short dashes line, whereby a plurality of electrodes 1100 each having an electrode tab 1110 may be obtained.

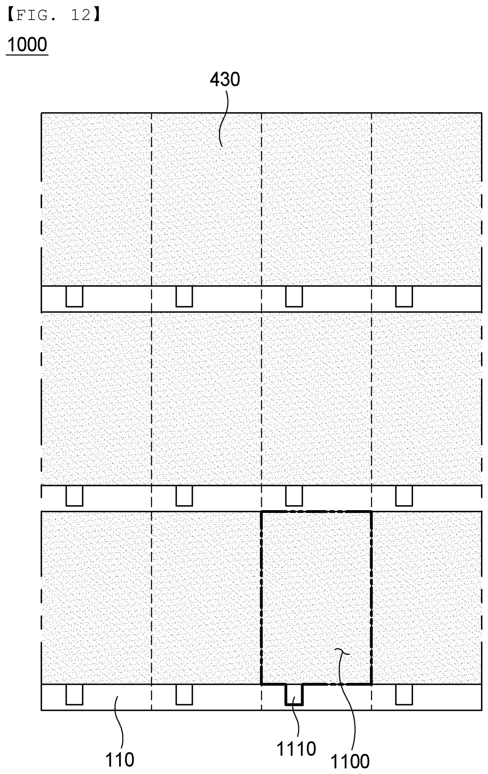

FIG. 12 is a plan view of a modified electrode sheet, illustrating a process of forming an electrode. Referring to FIG. 12, the electrode sheet 1000 may be manufactured using an electrode sheet manufacturing apparatus in which three first nozzles and three second nozzles are alternately provided. The electrode sheet 1000 is formed such that three areas, to which a first coating material sprayed from the first nozzles has been applied, are uncoated portions, from which metal foil 110 is exposed, and the remaining three areas, excluding the uncoated portions, are coated portions, to which a first coating material has been applied.

Upon manufacturing an electrode using the electrode sheet 1000 having the above-described shape, the electrode sheet 1000 is slit in the longitudinal direction, and the uncoated portions, from which the metal foil 110 is exposed, and the coated portions are notched along a thick alternate long and two short dashes line, whereby a plurality of electrodes 1100 each having an electrode tab 1110 may be obtained.

In the electrode manufactured through the above process, no sliding portion is formed at the coated portion, on which the electrode active material has been coated. When the electrode and a separator are stacked and laminated, therefore, the electrode and the separator are not separated from each other, whereby it is possible to minimize conventional problems of increased resistance, electrolyte depletion, and lithium precipitation.

Those skilled in the art to which the present invention pertains will appreciate that various applications and modifications are possible within the category of the present invention based on the above description.

### (Description of Reference Symbols)

- 100:: Unwinder
- 110:: Metal foil
- 200:: Rewinder
- 300:: First coating member
- 310:: First nozzle
- 320:: First coating material supply unit
- 330:: First coating material
- 400:: Second coating member
- 410:: Second nozzle
- 420:: Second coating material supply unit
- 430:: Second coating material
- 500:: Drying member
- 1000:: Electrode sheet
- 1100:: Electrode
- 1110:: Electrode tab
- D1:: Thickness of first coating material
- D2:: Thickness of second coating material

## Claims

1. An electrode sheet manufacturing apparatus comprising:
a rewinder configured to wind a metal foil;
a first coating member located at a rear of the rewinder, the first coating member being configured to apply a first coating material to a predetermined area of the metal foil; and
a second coating member located between the rewinder and the first coating member, the second coating member being configured to apply a second coating material comprising an electrode active material, wherein
the applied first coating material and the applied second coating material do not overlap each other.

2. The electrode sheet manufacturing apparatus according to claim 1, wherein the first coating material comprises a hydrophobic material.

3. The electrode sheet manufacturing apparatus according to claim 2, wherein the first coating material comprises a volatile material.

4. The electrode sheet manufacturing apparatus according to claim 3, further comprising a drying member located between the rewinder and the second coating member, the drying member being configured to volatilize the first coating material.

5. The electrode sheet manufacturing apparatus according to claim 1, wherein each of the first coating member and the second coating member is a slot die.

6. The electrode sheet manufacturing apparatus according to claim 1, wherein
the first coating member comprises at least one first nozzle and a first coating material supply unit configured to supply the first coating material to the first nozzle, and
the second coating member comprises at least one second nozzle and a second coating material supply unit configured to supply the second coating material to the second nozzle.

7. The electrode sheet manufacturing apparatus according to claim 6, wherein
each of the first nozzle and the second nozzle is provided in one, and
the first nozzle and the second nozzle are located so as not to overlap each other in a longitudinal direction (X) of the metal foil.

8. The electrode sheet manufacturing apparatus according to claim 6, wherein
the first nozzle is provided in one while the second nozzle is provided in two, and
the first nozzle and the second nozzles are located so as not to overlap each other in a longitudinal direction (X) of the metal foil.

9. The electrode sheet manufacturing apparatus according to claim 6, wherein
each of the first nozzle and the second nozzle is provided in plural so as to be spaced apart from each other by a predetermined distance in a width direction (Y) of the metal foil, and
the first nozzles and the second nozzles are located so as not to overlap each other in a longitudinal direction (X) of the metal foil.

10. The electrode sheet manufacturing apparatus according to claim 1, wherein the second coating material comprises a hydrophilic material.

11. An electrode sheet manufacturing method comprising:
a first step of supplying a metal foil;
a second step of coating the metal foil with a first coating material comprising a hydrophobic material; and
a third step of coating the metal foil with a second coating material comprising an electrode active material, wherein
the first coating material and the second coating material are continuously applied to the metal foil in a longitudinal direction (X).

12. The electrode sheet manufacturing method according to claim 11, wherein the first coating material and the second coating material do not overlap each other.

13. The electrode sheet manufacturing method according to claim 11, further comprising a fourth step of drying the metal foil coated with the first coating material and the second coating material after the third step.

14. The electrode sheet manufacturing method according to claim 12, wherein, in the second step, the first coating material is provided in plural so as to be spaced apart from each other in a width direction (Y) of the metal foil.

15. The electrode sheet manufacturing method according to claim 12, wherein the second coating material comprises a hydrophilic material.
